**Europäisches Patentamt**

**European Patent Office**

**Office européen des brevets**

(19)

(11) Veröffentlichungsnummer: **0 143 353**

**B1**

(12) # EUROPÄISCHE PATENTSCHRIFT

(45) Veröffentlichungstag der Patentschrift:
14.12.88

(21) Anmeldenummer: 84113035.4

(22) Anmeldetag: 30.10.84

(51) Int. Cl.⁴: **B 60 N 1/02,** B 60 N 1/10

(54) **Polstersitz, insbesondere Polstersitzbank, für Fahrzeuge.**

(30) Priorität: 26.11.83 DE 3342881

(43) Veröffentlichungstag der Anmeldung:
05.06.85 Patentblatt 85/23

(45) Bekanntmachung des Hinweises auf die Patenterteilung:
14.12.88 Patentblatt 88/50

(84) Benannte Vertragsstaaten:
BE DE FR GB IT NL

(56) Entgegenhaltungen:
EP-A-0 017 388
DE-A-2 938 952
FR-A-2 187 578
US-A-3 537 751
US-A-3 877 749

(73) Patentinhaber: **Westfalia- Werke Franz Knöbel & Söhne KG, Am Sandberg 45, D-4840 Rheda- Wiedenbrück (DE)**

(72) Erfinder: **Braun, Dieter, Dipl.- Ing., Robert- Schumann- Strasse 6, D-4840 Rheda- Wiedenbrück (DE)**
Erfinder: **Möller, Werner, Dipl.- Ing., Cappenberger Weg 15, D-4836 Herzebrock 2 (DE)**
Erfinder: **Thülig, Werner, Pickhüttenweg 14, D-4835 Rietberg (DE)**

(74) Vertreter: **Müller, Gerd, Patentanwälte HEMMERICH- MÜLLER- GROSSE- POLLMEIER- MEY Hammerstrasse 2, D-5900 Siegen 1 (DE)**

## Beschreibung

Die Erfindung betrifft einen Polstersitz, insbesondere eine Polstersitzbank, für Fahrzeuge, vornehmlich Kraftfahrzeuge, die als Reise- bzw. Wohnmobile ausgelegt sind, mit einem Sitzpolster und einem Rückenpolster, bei denen jeweils ein formstabiler Grundkörper, beispielsweise ein Rahmen oder eine Platte, die eigentliche Polsterung, z. B. eine Schaumstoffauflage, trägt, und bei denen der Grundkörper des Rückenpolsters in seiner oberen Randzone auf seiner ganzen Länge einen aus einem plastisch verformbaren Schichtkörperwerksktoff gebildeten Aufsatzkörper als Aufschlagdämpfer hält, wobei Grundkörper, Aufsatzkörper und Polsterung gemeinsam von einer Bezugshülle, etwa aus Textilmaterial, Leder und/oder Kunststoff, umgeben ist.

Fahrzeuge, vornehmlich Kraftfahrzeuge, die hauptsächlich zur Personenbeförderung benutzt werden sollen, müssen in ihrem Innenraum bestimmte Sicherheitsanforderungen erfüllen, damit beim Eintritt von Unfällen Personenschäden weitestgehend vermieden, mindestens aber beträchtlich vermindert werden können.

Besonders die Aufschlagbereiche des Kopfes im Innenraum für die im Fahrzeug sitzenden Personen, d.h., alle nicht verglasten Flächen des Fahrzeug inneren, mit denen der Kopf einer in bestimmter Sitzposition im Fahrzeug befindlichen Bezugsperson bei durch Unfälle verursachten Relativbeschleunigungen in Kontakt kommen kann, müssen eine Auslegung erhalten, die im Bereich von Millisekunden Verzögerungswerte erreicht, die gleich oder kleiner als 80 g sind. Es ist also erforderlich, die im Kopfaufschlagbereich jeder einzelnen im Fahrzeug zu placierenden Bezugsperson liegenden Innenflächen des Fahrzeuges und auch der darin befindlichen Ausrüstungen bzw. Einrichtungen so zu gestalten, daß diese ohne Bruch- und Splitterverhalten einen genügend großen Verformungsweg gewährleisten.

Diese Sicherheitsanforderungen gelten in besonderem Maße für die als sogenannte Reise- bzw. Mohnmobile ausgelegten Kraftfahrzeuge, welche regelmäßig mit als Polstersitze, insbesondere Polstersitzbänke, ausgeführten Sitzgruppen ausgestattet werden, die die Möglichkeit der Sitzgruppenvariation zulassen. Die in Längsrichtung des Fahrzeuges hintereinander angeordneten Sitzgruppen sind nämlich, bspw. gemäß DE-V-7 737 061, so ausgelegt, daß sie sich mindestens in eine sogenannte Fahrtstellung und in eine sogenannte Wohnstellung bringen lassen sowie in den meisten Fällen auch noch eine Anordnung in der sogenannten Schlafstellung zulassen. Bei Fahrstellung der Sitzgruppen sind dabei die Polstersitze und/oder Polstersitzbänke so eingestellt, daß sie sich in gleichgerichteter Lage mit in Fahrtrichtung hinten liegendem Rückenpolster befinden. In der Wohnstellung haben hingegen zwei in Längsrichtung des Fahrzeuges benachbarte polstersitze und/oder Polstersitzbänke zueinander spiegelbildliche Einstellung, d.h. der in Fahrtrichtung vorne befindliche Polstersitz bzw. die Sitzbank hat eine Einstellung, bei der das Rückenpolster der Fahrtrichtung zugewendet ist, während es beim anderen Polstersitz bzw. der anderen Polstersitzbank in der der Fahrtrichtung abgewendeten Lage verbleibt.

Für die Schlafstellung lassen sich zwei in Fahrtrichtung hintereinander befindliche Polstersitze bzw. Polstersitzbänke so einrichten, daß drei Sitz- bzw. Rückenpolster in gleicher Ebene dicht hintereinander liegen, während das vierte Sitz- bzw. Rückenpolster gegebenenfalls in eine flach geneigte Lage gebracht werden kann, um als etwa erhöhte Kopfauflage zu wirken.

Die Erfindung zielt darauf ab, einen Polstersitz, insbesondere eine Polstersitzbank der eingangs angegebenen Gattung zu schaffen, die bei Benutzung in Fahrzeugen, und zwar vornehmlich in Kraftfahrzeugen, welche als Reise- bzw. Wohnmobile in Gebrauch stehen, die Sicherheitsanforderungen bezüglich des Kopfaufschlagbereiches gewährleisten können, wenn alle Polstersitze, insbesondere Polstersitzbänke, der variablen Sitzgruppe in ihre sogenannte Fahrtstellung gebracht sind.

Zur Lösung dieser Aufgabe ist nach dem Kennzeichen des Anspruchs 1 erfindungsgemäß vorgesehen, daß der Aufsatzkörper ausschließlich aus einem im Querschnitt bügel- oder schlaufenförmigen Schichtkörperprofil besteht, das mit den beiden Schenkeln die Randzone des Grundkörpers umfaßt und daran anliegt, und daß dabei die lichte Profilhöhe über der Randzone des Grundkörpers mindestens gleich der größten, lichten Profilbreite bemessen ist.

Besonders hat es sich nach der Erfindung bewährt, wenn gemäß Anspruch 2 die lichte Profilhöhe des Schichtkörperprofils über der Randzone des Grundkörpers größer als seine lichte Profilbreite bemessen wird.

Gemäß Anspruch 3 wird ein wichtiges Weiterbildungsmerkmal der Erfindung darin gesehen, daß das Schichtkörperprofil aus Metallblech besteht und eine Wanddicke von höchstens 1 mm aufweist, vorzugsweise eine Wanddicke zwischen 0,4 und 0,8 mm hat. In besonderem Maße hat sich ein Schichtkörperprofil praktisch bewährt, dessen Wanddicke bei Ausführung in Stahlblech 0,6 mm beträgt.

In weiterer Ausgestaltung der Erfindung ist nach Anspruch 4 vorgesehen, daß die lichte Profilhöhe des Schichtkörperprofils einem Mehrfachen, z .B dem Doppelten, der lichten Profilbreite entspricht, wobei nach Anspruch 5 die lichte Profilbreite des Schichtkörperprofils in seinem gekrümmten, nämlich einem konvex gewölbten Kreisbogen folgenden, Endbereich größer bemessen ist als im Anlagebereich seiner Schenkel am Grundkörper. Dabei schließen sich die beiden Schenkel des Schichtkörperprofils tangential an den konvex gekrümmten Endbereich an und können in Richtung zu dem das Schichtkörperprofil tragenden Grundkörper hin eine licht konkav gekrümmte Formgebung erhalten. Besonders bewährt hat es sich dabei nach Anspruch 6, wenn die lichte Profilbreite des Schichtkörperprofils in seinem konvex gekrümmten Endbereich etwa dem Eine inhalbfachen der lichten Profilbreite im Anlagebereich seiner Schenkel am Grundkörper entspricht. Schließlich ist nach Anspruch 7 noch vorgesehen, daß die freien Enden des Schichtkörperprofils durch ein- und/oder aufgesteckte Kunststoffkappen abgeschlossen sind, welche sich einerseits mit innenseitig an ihren Zargenrand angeformten Hocken in Lochungen am Ende des Schichtkörperprofils verrasten lassen, sowie andererseits durch ihren Boden am Grundkörper befestigt, bspw. verschraubt werden können.

Weitere Merkmale und Vorteile der Erfindung werden nachfolgend an einem in der Zeichnung dargestellten Ausführungsbeispiel näher erläutert. Es zeigt

Figur 1    in schematisierter Seitenansicht einen als Reise- bzw. Wohnmobil ausgelegten Kleinbus mit zwei in Längsrichtung des Fahrzeuges hintereinander und hinter der Fahrerkabine angeordheten Polstersitzbänken in der Fahrtstellung,

Figur 2    eine der Fig. 1 entsprechende Darstellung, wobei jedoch die beiden Polstersitzbänke relativ zueinander in die Wohnstellung gebracht sind,

Figur 3    wiederum eine der Fig. 1 entsprechende Darstellung, bei der jedoch die beiden Polstersitzbänke relativ zueinander in die Schlafstellung gebracht sind,

Figur 4    etwa in natürlicher Größe den in Fig. 1 mit IV gekennzeichneten Bereich des Rückenpolsters einer Polstersitzbank im Querschnitt und

Figur 5    einen Schnitt entlang der Linie V - V in Fig. 4 durch den Eckbereich des Rückenpolsters eines Polstersitzes.

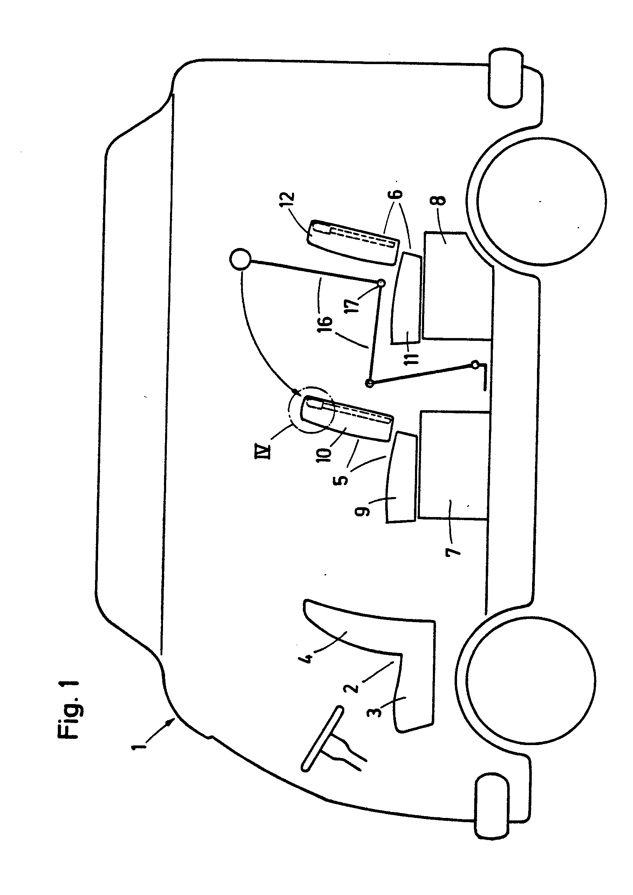

In den Fig. 1 bis 3 der Zeichnung ist ein als Reise- bzw. Wohnmobil eingerichteter Kleinbus 1 dargestellt. Dieser Kleinbus 1 ist in der Fahrerkabine mit den üblichen Polstersitzen 2 ausgestattet, die entweder als Einzelsitze oder aber auch als Sitzbank ausgebildet sein können, die jeweils ein Sitzpolster 3 und ein Rückenpolster 4 aufweisen.

Im Innenraum des Kleinbusses 1 hinter der Fahrerkabine und in Fahrzeuglängsrichtung hintereinander sind weiterhin zwei variable Sitzgruppen 5 und 6 untergebracht, die jeweils aus mehreren nebeneinanderstehenden einzelnen Polstersitzen bestehen können, vorzugsweise jedoch als mehrsitzige Polstersitzbänke ausgeführt werden. Jeder Polstersitz bzw. die Polstersitzbank der Sitzgruppe 5 ist auf einem Sockelkasten 7 montiert, der auf dem Fahrzeugboden ruht und in längsverlaufenden Führungsschienen verschiebbar und feststellbar gehalten wird. Auch jeder Polstersitz bzw. die Polstersitzbank der Sitzgruppe 6 ist auf einem Sockelkasten 8 angeordnet, der auf dem Fahrzeugboden ruht und dort entweder in Führungsschienen verschiebbar oder aber ortsfest gehalten ist.

Die Polstersitze bzw. Polstersitzbank der Sitzgruppe 5 weisen jeweils zwei Polsterkörper 9 und 10 auf, während die Polstersitze bzw. Polstersitzbank der Sitzgruppe 6 in entsprechender Weise zwei Polsterkörper 11 und 12 haben.

Die beiden Polsterkörper 9 und 10 der Polstersitze bzw. Polstersitzbank der Sitzgruppe 5 wie auch die beiden Polsterkörper 11 und 12 der Polstersitze bzw. Polstersitzbank der Sitzgruppe 6 sind miteinander und mit dem zugehörigen Sockelkasten 7 bzw. 8 durch besondere Beschläge verbunden, die es ermöglichen, die Polsterkörper 9 und 10 sowie 11 und 12 relativ zueinander sowie auch relativ zu den Sockelkästen 7 und 8 in unterschiedliche Winkellagen zu bringen. Aus Fig. 1 ist dabei die sogenannte Fahrstellung der beiden Sitzgruppen 5 und 6 ersichtlich. In dieser Fahrstellung sind sämtliche Polstersitze bzw. die Polstersitzbänke der beiden Sitzgruppen 5 und 6 so eingestellt, daß sie nur mit Blick in Fahrtrichtung besetzt werden können. In der Sitzgruppe 5 bildet dabei jeweils der Polsterkörper 9 das Sitzpolster, während der Polsterkörper 10 als Rückenpolster wirksam ist. In der Sitzgruppe 6 dient der Polsterkörper 11 als Sitzpolster, während der Polsterkörper 12 das Rückenpolster bildet.

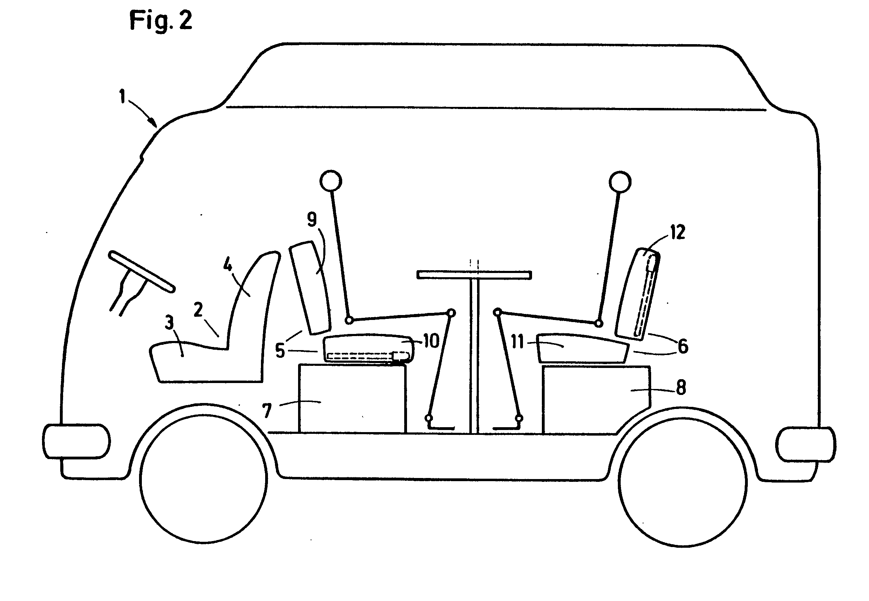

Als Fig. 2 der Zeichnung ist die sogenannte Wohnstellung der beiden Sitzgruppen 5 und 6 gezeigt, in welcher die Polstersitze bzw. Polstersitzbank der Sitzgruppe 5 spiegelbildlich zu den Polstersitzen bzw. der Polstersitzbank der Sitzgruppe 6 eingestellt ist.

Damit in der Wohnstellung zwischen den beiden Sitzgruppen 5 und 6 genügend Fußraum für sich gegenübersitzende Personen zur Verfügung steht und dort gegebenenfalls auch noch ein Tisch aufgerichtet werden kann, werden die Polstersitze bzw. die Polstersitzbank der Sitzgruppe 5 mit Hilfe ihres Sockelkastens 7 aus der Stellung nach Fig. 1 in die Stellung nach Fig. 2 zur Fahrerkabine hin verschoben.

In der Wohnstellung nach Fig. 2 nehmen die Polstersitze bzw. die Polstersitzbank der Sitzgruppe 6 die gleiche Stellung ein, wie bei der Fahrtstellung gemäß Fig. 1. Der Polsterkörper 11 bildet hier nämlich das Sitzpolster, während der Polsterkörper 12 als Rückenpolster wirksam ist.

Bei den Polstersitzen bzw. der Polstersitzbank der Sitzgruppe 5 ist in der Wohnstellung jedoch die Gebrauchslage der Polsterkörper 9 und 10 gegenüber der Fahrtstellung nach Fig. 1 vertauscht, d.h. der Polsterkörper 10 bildet hier das Sitzpolster, während der Polsterkörper 9 als Rückenpolster wirksam ist.

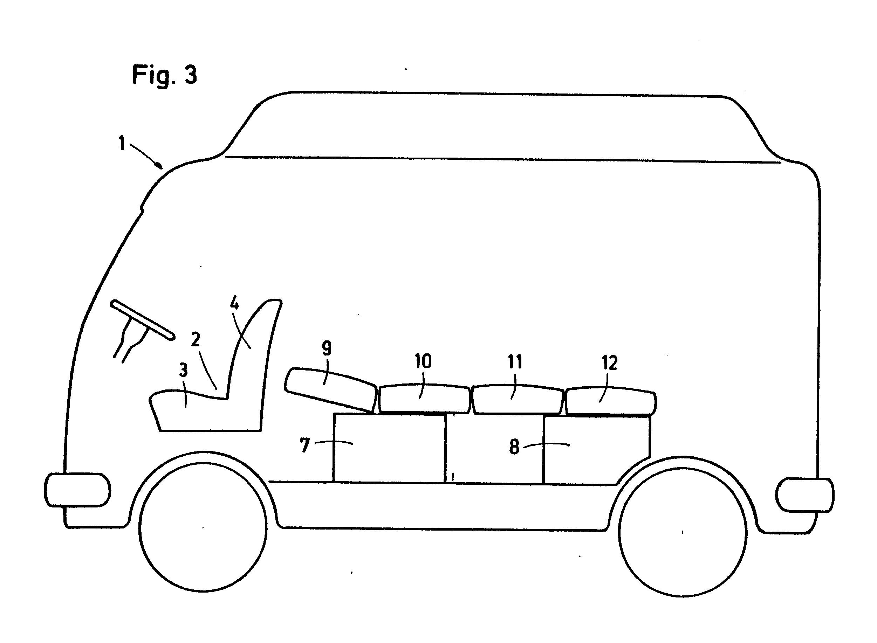

In der Schlafstellung nach Fig. 3 sind die Polstersitze bzw. Polstersitzbänke der beiden Sitzgruppen 5 und 6 und die sie tragenden Sockelkästen 7 und 8 relativ zueinander in eine solche Stellung gebracht, daß die Polsterkörper 10, 11 und 12 etwa in waagerechter Ebene dicht hintereinanderliegen, während der Polsterkörper 9 eine flach geneigte Lage einnimmt, um eine etwas erhöhte Kopfauflage für liegende Personen zu bilden.

Die Polsterkörper 9, 10 und 11, 12 der Polstersitze bzw. Polstersitzbänke in beiden Sitzgruppen 5 und 6 haben jeweils einen formstabilen Grundkörper 13, bspw. einen Rahmen oder eine Platte, auf der die eigentliche Polsterung 14 ruht, welche bspw. von einer relativ dicken Schaumstoffauflage gebildet werden kann. Der formstabile Grundkörper 13 und die eigentliche Polsterung 14 sind gemeinsam von einer Bezugshülle 15 umgeben, die bspw. aus Textilmaterial, Leder und/oder Kunststoff bestehen kann sowie zusammen mit dem Grundkörper 13 und der Polsterung 14 jeweils einen Polsterkörper bildet.

Mindestens der formstabile Grundkörper 13 desjenigen Polsterkörpers in den Sitzgruppen 5 und 6, welcher bei in Fahrtstellung befindlichen Sitzgruppen 5 und 6 gemäß Fig. 1 im Kopfaufschlagbereich einer sitzend transportierten Person liegt, muß aus Sicherheitsgründen so ausgelegt werden, daß sie ein energieumwandelndes Verhalten zeigt, also einen Kopfaufprall unter plastischer Verformung mit Verzögerungswerten aufnehmen kann, die gleich oder kleiner als 80 g sind.

Bei in Fahrtstellung gemäß Fig. 1 befindlichen Polstersitzen bzw. Polstersitzbänken der Sitzgruppen 5 und 6 muß mindestens der Grundkörper 13 des Polsterkörpers 10 der Sitzgruppe 5 eine solche Auslegung erhalten, weil er in seiner Wirkstellung als Rückenpolster in seinem oberen Rand im Kopfaufschlagbereich von Personen liegt, die auf den Polstersitzen bzw. der Polstersitzbank der Sitzgruppe 6 Platz nehmen, wie das in Fig. 1 anhand einer nur schematisch dargestellten Normpuppe 16 gezeigt ist. Dabei ist erkennbar, wie sich der Oberkörper der Normpuppe 16 um den sogenannten H-Punkt 17, der das Hüftgelenk einer Person darstellt, auf einem Kreisbogen nach vorne verlagern und mit dem Kopf auf den das Rückenpolster bildenden Polsterkörper 10 in der Sitzgruppe 5 treffen kann.

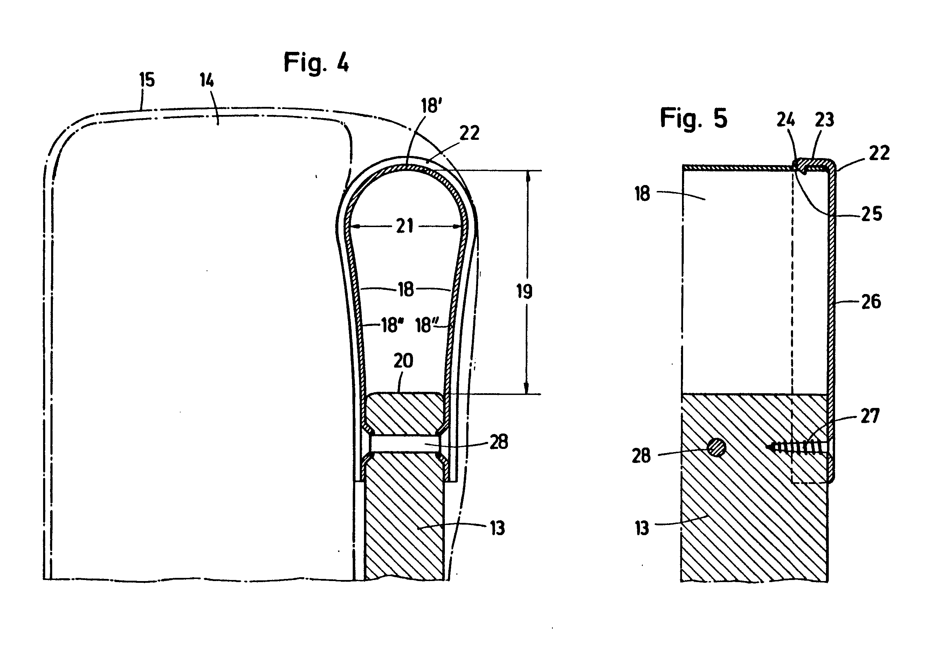

Mindestens die obere Randzone am Grundkörper 13 des als Rückenpolster wirkenden Polsterkörpers 10 ist auf ihrer ganzen Länge von einem im Querschnitt bügel- oder schlaufenförmigen Schichtkörperprofil 18 aus plastisch verformbarem Werkstoff umfaßt, wie das deutlich der Fig. 4 entnommen werden kann. Dieses Schichtkörperprofil 18 kann dabei aus Metallblech bestehen und eine Wanddicke haben, die höchstens 1 mm beträgt, vorzugsweise aber zwischen 0,4 und 0,8 mm liegt. Bewährt hat sich die Benutzung eines Schichtkörperprofils 18 aus Stahlblech mit einer Wanddicke von etwa 0,6 mm, weil es nämlich bei einer Aufschlaggeschwindigkeit von etwa 25 km/h einen Verzögerungswert von weniger als 60 g über einen statischen Verformungsweg von mehr als 50 mm erreicht, wenn eine Prüfung mit der Normpuppe 16 stattfindet.

Die lichte Profilhöhe 19 über der Randzone 20 des Grundkörpers 13 sollte dabei mindestens gleich der lichten Profilbreite 21 bemessen werden. Besonders vorteilhaft ist es jedoch, wenn die lichte Profilhöhe 19 größer als die lichte Profilbreite 21 ausgelegt wird und dabei einem Mehrfachen, z. B. dem Doppelten, der lichten Profilbreite 21 entspricht.

Auch hat es sich bewährt, wenn die lichte Profilbreite 21 des Schichtkörperprofils 18 in seinem konvex gekrümmten Endbereich 18' größer bemessen wird als im Anlagebereich seiner beiden Schenkel 18'' an den Seitenflächen des Grundkörpers 13. Die lichte Profilbreite 21 im gekrümmten Bereich 18' des Schichtkörperprofils 18 kann dabei etwa dem Eineinhalbfachen der lichten Profilbreite im Anlagebereich der Schenkel 18'' am Grundkörper 13 entsprechen.

Sinnvoll ist es zur Erzielung eines günstigen Verformungsverhaltens des Schichtkörperprofils 18 auch, wenn die sich tangential an den konvex gekrümmten Endbereich 18' anschließenden beiden Schenkel 18'' nicht gerade verlaufen, sondern vielmehr eine leicht konkav gekrümmte Form erhalten.

Den Fig. 4 und 5 kann noch entnommen werden, daß die freien Enden des Schichtkörperprofils 18 zweckmäßigerweise durch eine aufgesteckte Kunststoffkappe 22 abgeschlossen werden, die an ihrem Zargenrand 23 innenseitig angeformte Nocken 24 aufweist, welche in Löcher 25 des Schichtkörperprofils 18 einrasten. Andererseits kann der Boden 26 der Kunststoffkappen 22, bspw. durch Schrauben 27 mit dem Grundkörper 13 verbunden werden.

Zu erwähnen ist noch, daß das Schichtkörperprofil 18 über seine beiden Schenkel 18'', bspw, durch Nieten 28 oder auch durch Schraubverbindungen mit dem Grundkörper 13 verbunden werden kann.

Selbstverständlich ist es auch möglich, das plastisch verformbare Schichtkörperprofil 18 mit der Randzone eines Grundkörpers 13 zu verbinden, der nicht als Platte, sondern bspw. als Rahmen gestaltet ist.

Selbstverständlich liegt es im Rahmen der Erfindung, sämtliche Polsterkörper 9, 10, 11, 12 der den Sotzgruppen 5 und 6 angehörenden Polstersitze bzw. Polstersitzbänke mit einem Grundkörper auszustatten, dessen Randzonen mit einem der optimalen Energieumwandlung dienlichen Schichtkörperprofil 18 ausgestattet sind. Jeder Polstersitz bzw. jede polstersitzbank läßt sich dann im Inneren des Kleinbusses 1 so anordnen, daß ihr jeweils als Rückenpolster wirkender Polsterkörper einen energieumwandelnden Kopfaufschlagbereich aufweist.

## Patentansprüche

1. Polstersitz, insbesondere Polstersitzbank, für Fahrzeuge, vornehmlich Kraftfahrzeuge, die als Reise- bzw. Wohnmobile ausgelegt sind, mit einem Sitzpolster und einem Rückenpolster, bei denen jeweils ein formstabiler Grundkörper (13),bspw. ein Rahmen oder eine Platte, die eigentliche Polsterung, z. B. eine Schaumstoffauflage (14), trägt, und bei denen der Grundkörper des Rückenpolsters in seiner oberen Randzone auf seiner ganzen Länge einen aus einem plastisch verformbaren Schichtkörperwerkstoff gebildeten Aufsatzkörper (18) als Aufschlagdämpfer hält, wobei Grundkörper, Aufsatzkörper und Polsterung gemeinsam von einer Bezugshülle (15), etwa aus Textilmaterial, Leder und/oder Kunststoff, umgeben ist, dadurch gekennzeichnet, daß der Aufsatzkörper (18) ausschließlich aus einem im Querschnitt bügel- oder schlaufenförmigen Schichtköperprofil (18', 18'') besteht, das mit den beiden Schenkeln (18'') die Randzone (20) des Grundkörpers (13) umfaßt und daran anliegt, und daß dabei die lichte Profilhöhe (19) über der Randzone (20) des Grundkörpers (13) mindestens gleich der größten, lichten Profilbreite (21) bemessen ist.

2. Polstersitz nach Anspruch 1, dadurch gekennzeichnet, daß die lichte Profilhöhe (19) des Schichtkörperprofils (18, 18', 18'') über der Randzone (20) des Grundkörpers (13) größer als die lichte Profilbreite (21) bemessen ist.

3. Polstersitz nach einem der Ansprüche 1 und 2, dadurch gekennzeichnet, daß das Schichtkörperprofil (18, 18', 18'') aus Metallblech besteht und eine Wanddicke von höchstens 1 mm aufweist, vorzugsweise eine Wanddicke zwischen 0,4 und 0,8 mm hat.

4. Polstersitz nach einem der Ansprüche 1 bis 3, dadurch gekennzeichnet, daß die lichte Profilhöhe (19) des Schichtkörperprofils (18, 18', 18'') einem Mehrfachen, z. B. dem Doppelten, der lichten Profilbreite (21) entspricht.

5. Polstersitz nach einem der Ansprüche 1 bis 4, dadurch gekennzeichnet, daß die lichte Profilbreite (21) des Schichtkörperprofils (18, 18', 18'') in seinem gekrümmten Endbereich (18') größer bemessen ist als im Anlagebereich seiner Schenkel (18'') am Grundkörper (13).

6. Polstersitz nach einem der Ansprüche 1 bis 5, dadurch gekennzeichnet, daß die lichte Profilbreite (21) des Schichtkörperprofils (18, 18'') in seinem gekrümmten Endbereich (18') etwa dem Eineinhalbfachen der lichten Profilbreite im Anlagebereich seiner Schenkel (18'') am Grundkörper (13) entspricht.

7. Polstersitz nach einem der Ansprüche 1 bis 6, dadurch gekennzeichnet, daß die freien Enden des Schichtkörperprofils (18, 18', 18'') durch ein- und/oder aufgesteckte Kunststoffkappen (22) abgeschlossen sind.

8. Polstersitz nach einem der Ansprüche 1 bis 7, dadurch gekennzeichnet, daß die an den konvex gekrümmten Endbereich (18') tangential anschließenden beiden Schenkel (18'') des Schichtkörperprofils (18, 18', 18'') einen licht konkaven Krümmungsverlauf haben.

## Claims

1. Upholstered seat, more especially an upholstered bench, for vehicles, which are designed as travel caravans or mobile homes, with a seat cushion and a back cushion, with each of which a dimensionally stable base member (13), for example, a frame or a plate, which carries the upholstery proper, e.g. a foam plastic support (14), and with which the foundation member of the back support, in its upper marginal zone and over its entire length, holds a head rest (18) formed of a plastically deformable laminated material as shock absorber, the base member, head rest and padding being jointly enclosed by a cover (15), perhaps of textile material, leather and/or synthetic plastics, characterised in that the head rest (18) consists exclusively of a laminated section member (18', 18'') which is bowed or pear-shaped in cross-section, which member, with the two arms (18''), embraces the marginal zone (20) of the base member (13) and bears thereon, and that the internal profile height (19) over the marginal zone (20) of the base member (13) is of dimensions at least equal to the largest, internal profile width (21).

2. Upholstered seat according to claim 1, characterised in that the internal profile height (19) of the laminated section member (18, 18', 18'') over the marginal zone (20) of the base member (13) has a dimension larger than the internal profile width (21).

3. Upholstered seat according to one of the claims 1 and 2, characterised in that the laminated section member (18, 18', 18'') consists of sheet metal and has a wall thickness of at most 1 mm, advantageously between 0,4 and 0,8 mm.

4. Upholstered seat according to one of claims 1 to 3, characterised in that the internal profile height of the laminated section member (18, 18',18'') corresponds to several times, for example, twice the internal profile width (21).

5. Upholstered seat according to one of claims 1 to 4, characterised in that the internal profile width (21) of the laminated section member (18, 18', 18''), in its curved end region (18') is of larger dimensions than in the region where its arms (18") bear on the base member (13).

6. Upholstered seat according to one of claims 1 to 5, characterised in that the internal profile width (21) of the laminated section member (18, 18', 18") in its curved end region (18') corresponds to about one and a half times the internal profile width in the region where its arms (18") bear on the base member (13).

7. Upholstered seat according to one of claims 1 to 6, characterised in that the free ends of the laminated body section (18, 18', 18") are closed by synthetic plastic caps (22) which are fitted therein and/or thereon.

8. Upholstered seat according to one of the claims 1 to 7, characterised in that those two arms (18") of the laminated body section (18,18' 18") tangentially adjoining the end region (18') of convex curvature extend with a slight concave curvature.

## Revendications

1. Siège rembourré, notamment banquette rembourrée, pour véhicules, surtout véhicules automobiles, aménagés en véhicules de voyage ou de séjour, qui comporte un rembourrage de siège et un rembourrage de dossier et dans lequel une infrastructure (13) de forme stable, par exemple un cadre ou une plaque, porte le rembourrage proprement dit, constitué par exemple par une couche de matériau mousse (14) et dans lequel l'infrastructure du rembourrage du dossier porte, au niveau de sa zone marginale supérieure, sur toute sa longueur, une superstructure (18) constituée par un matériau stratifié déformable plastiquement, l'infrastructure, la superstructure (18) et le rembourrage étant tous ensemble entourés par une enveloppe (15) constituée par du textile, du cuir et/ou par une matière plastique, caractérisé en ce que la superstructure (18) est exclusivement constituée par un profil en matériau stratifié (18', 18") présentant une section en forme d'étrier ou de ganse et entourant par ses deux branches (18"), en s'appliquant sur elle, la zone marginale (20) de l'infrastructure (13) et en ce que la hauteur intérieure (19) du profil au-dessus de la zone marginale (20) de l'infrastructure (13) est au moins égale à la plus grande largeur intérieure libre (21) du profil.

2. Siège rembourré selon la revendication 1, caractérisé en ce que la hauteur libre (19) du profil en matériau stratifié (18, 18', 18") au-dessus de la zone marginale (20) de l'infrastructure (13) est plus grande que la largeur libre (21) du profil.

3. Siège rembourré selon l'une des revendications 1 ou 2, caractérisé en ce que le profil en matériau stratifié (18, 18', 18") est constitué par de la tôle métallique et a une épaisseur de paroi de 1 mm au moins, de préférence une épaisseur de paroi comprise entre 0,4 et 0,8 mm.

4. Siège rembourré selon l'une des revendications 1 à 3, caractérisé en ce que la hauteur intérieure libre (19) du profil en matériau stratifié (18, 18', 18") est égale à un multiplie, de préférence au double, de la largeur intérieure libre (21) du profil.

5. Siège rembourré selon l'une des revendications 1 à 4, caractérisé en ce que la largeur intérieure libre (21) du profil en matériau stratifié (18, 18', 18") est, dans sa zone d'extrémité incurvée (18'), plus grande que dans la zone de contact de ses branches (18") avec l'infrastructure (13).

6. Siège rembourré selon l'une des revendications 1 à 5, caractérisé en ce que la largeur intérieure libre (21) du profil en matériau stratifié (18, 18', 18") est, dans sa zone d'extrémité incurvée (18'), approximativement égale à une fois et demie sa largeur intérieure libre dans la zone de contact de ses branches (18") avec l'infrastructure (13).

7. Siège rembourré selon l'une des revendications 1 à 6 caractérisé en ce que les extrémités libres du profil en matériau stratifié (18, 18', 18") sont fermées par des capuchons (22) en matière plastique enfoncés dedans et/ou dessus.

8. Siège rembourré selon l'une des revendications 1 à 7, caractérisé en ce que les deux branches (18") du profil en matériau stratifié (18, 18', 18") qui se raccordent tangentiellement à la zone d'extrémité convexe (18') ont un tracé concave.

Fig. 1

Fig. 2

Fig. 3

Fig. 4

Fig. 5

0 143 353